# EUROPEAN PATENT SPECIFICATION

(11) **EP 2 321 517 B1**
(45) Date of publication and mention of the grant of the patent: **02.09.2015**
(21) Application number: 09795169.3
(22) Date of filing: 09.07.2009
(51) Int. Cl.: F02M 25/07, F16K 1/22, F16K 1/226, F16K 41/00

(54) **EXHAUST GAS RECIRCULATION BUTTERFLY VALVE**
DROSSELVENTIL FÜR ABGASRÜCKFÜHRUNG
SOUPAPE PAPILLON DE RECIRCULATION DE GAZ D'ÉCHAPPEMENT

(30) Priority: 10.07.2008 US 79689 P
(43) Date of publication of application: 18.05.2011
(73) Proprietor: Actuant Corporation, Butler, WI 53007 (US)
(72) Inventor: LILLY, Daryl, A., Winterset IA 50273 (US)
(74) Representative: Vinsome, Rex Martin
(86) International application number: PCT/US2009/050072
(87) International publication number: WO 2010/006145

(56) References cited:
- US-A- 5 346 136
- US-A1- 2007 214 771
- US-B1- 6 698 717
- US-B1- 6 698 717

## Description

### FIELD OF THE INVENTION

The invention relates to an exhaust gas recirculation butterfly valve.

### BACKGROUND OF THE INVENTION

US 6698717 discloses an exhaust gas recirculation system according to the preamble of claim 1.

### SUMMARY OF THE INVENTION

According to the present invention, there is provided an exhaust gas recirculation system for an engine, comprising:
an intake port in fluid communication with an intake manifold of the engine;
an exhaust line in fluid communication with at least one exhaust manifold of the engine;
an exhaust gas recirculation conduit in fluid communication with the exhaust line and the intake port; and
a butterfly valve fluidly positioned along the exhaust gas recirculation conduit and in fluid communication with the exhaust line and the intake port and including:
   a housing having a valve passageway through which exhaust gases pass from a first end to a second end of the valve, the valve passageway including:
      a shaft axis;
      bores on opposite sides of the passageway that are aligned along the shaft axis with one another;
      lap seating surfaces on opposite sides of the passageway facing opposite ends of the valve, the shaft axis being between the lap seating surfaces;
   a butterfly valve element in the valve passageway between the bores, the butterfly valve element having counter bores;
   two bushings, each bushing being received in a different one of the bores and extending from the bore inwardly into a different one of the counter bores of the butterfly valve element; and
   a shaft extending between the bores and laterally through the butterfly valve element, the shaft also extending in each of the bushings so as to journal the shaft relative to the housing;
characterised by a cooler fluidly positioned along the exhaust gas recirculation conduit and in fluid communication with the exhaust line and the intake port;
in that the shaft extends between the bores and laterally through the butterfly valve element so as to permit some freedom of relative movement;
and in that there is a first slip fit creating a first rotary joint between the bushings and the counter bores and a second slip fit creating a second rotary joint between the shaft and the bushings, and one of the slip fits is closer than the other.

The foregoing and other objects and advantages of the invention will be apparent in the detailed description and drawings which follow. In the description, reference is made to the accompanying drawings which illustrate a preferred embodiment of the invention.

### BRIEF DESCRIPTION OF THE DRAWINGS

Fig. 1a is a schematic representation of an EGR system according to the present invention;
Fig. 1b is a schematic representation of an EGR series-sequential turbocharger system according to the present invention;
Fig. 2 is a perspective view of a butterfly valve of the type used in the EGR systems of Figs. 1a and 1b;
Fig. 3 is an exploded perspective view of the butterfly valve of Fig. 2;
Fig. 4 is a sectional view from the line 4-4 of Fig. 2;
Fig. 5 is an end plan view of the butterfly valve of Fig. 2;
Fig. 6 is a cross-sectional view of the butterfly valve from the plane of the line 6-6 of Fig. 5; and
Fig. 7 is a cross-sectional view from the plane of the line 7-7 of Fig. 5.

### DETAILED DESCRIPTION OF THE PREFERRED EMBODIMENT

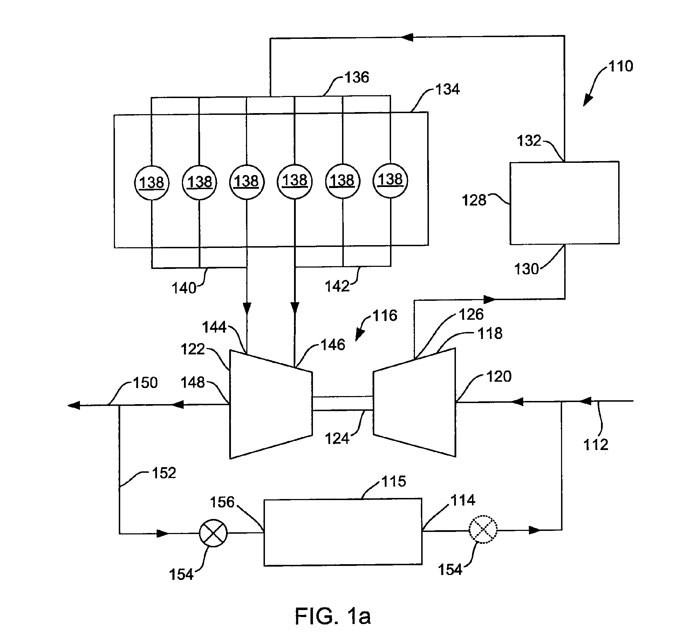

Fig. 1a shows a schematic representation of an exhaust gas recirculation (EGR) system 110. The system 110 includes an intake port 112 that may be in fluid communication with the air filter (not shown) of a vehicle. The intake port 112 fluidly communicates with an outlet 114 of a cooler 115. The cooler 115 may be any type of cooler commonly used in this type of system. The intake port 112 also fluidly communicates with a turbocharger 116. Specifically, the intake port 112 fluidly communicates with the inlet 120 of a compressor 118 of the turbocharger 116. The turbocharger 116 also includes a turbine 122 rotatably coupled to the compressor 118 by a shaft 124. An outlet 126 of the compressor 118 fluidly communicates with an inlet 130 of a cooler 128. The cooler 128 may be any type of cooler commonly used to cool gases from the compressor of a turbocharger. An outlet 132 of the cooler 128 fluidly communicates with the intake manifold 136 of an engine block 134. The engine block includes a plurality of combustion cylinders 138. Six combustion cylinders 138 are illustrated in this system. However, those skilled in the art will recognize appropriate changes to apply the present invention to an engine with any number or configuration of combustion cylinders. Three of the combustion cylinders 138 fluidly communicate with a first exhaust manifold 140. The remaining cylinders 138 fluidly communicate with a second exhaust manifold 142. The first and second exhaust manifolds 140 and 142 fluidly communicate with inlets 144 and 146, respectively, of the turbine 122. An outlet 148 of the turbine 122 fluidly communicates with the exhaust line 150 and an EGR conduit 152. The EGR conduit 152 fluidly communicates with an inlet 156 of the cooler 115 through an EGR valve 154, thereby providing a hot-side EGR valve. The EGR valve 154 is preferably a butterfly valve as discussed below.

It should be understood that the EGR system 110 shown in Fig. 1a can be modified. For example, an EGR system can be constructed in which the turbocharger 116 is not included. In addition, the outlet 114 of the cooler 115 may fluidly communicate with the intake port 112 through the EGR valve 154, thereby providing a cold-side EGR valve.

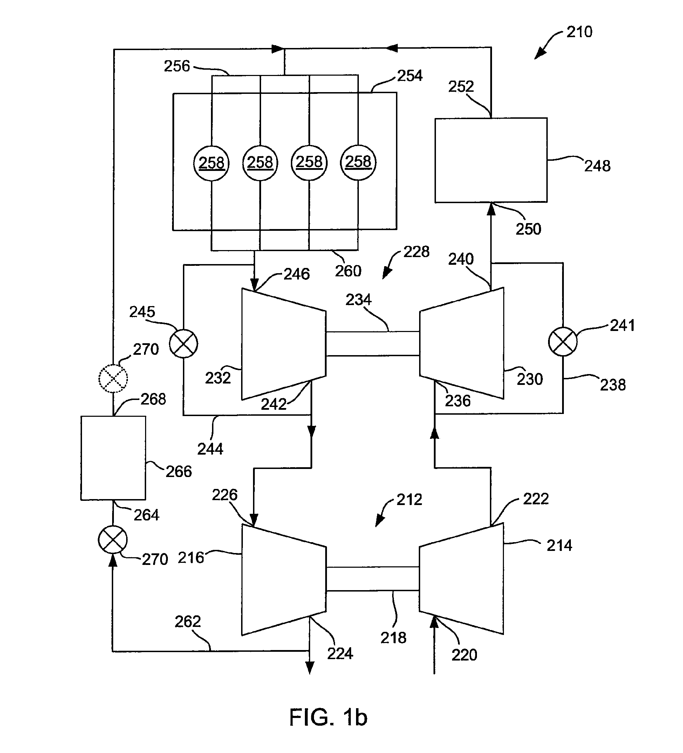

Fig. 1b shows a schematic representation of a series sequential turbocharger system 210. The system includes a low pressure turbocharger 212 having a low pressure compressor 214 and a low pressure turbine 216. A shaft 218 rotatably connects the low pressure compressor 214 and the low pressure turbine 216. The low pressure compressor 214 includes an inlet 220 that preferably fluidly communicates with the air filter (not shown) of the vehicle. The low pressure compressor 214 also includes an outlet 222 that fluidly communicates with other components of the system 210, as described below. The low pressure turbine 216 includes an outlet 224 that preferably fluidly communicates with the exhaust line (not shown) of the vehicle. The low pressure turbine 216 also includes an inlet 226 that fluidly communicates with other components of the system 210, as described below.

The system 210 includes a high pressure turbocharger 228 having a high pressure compressor 230 and a high pressure turbine 232. A shaft 234 rotatably connects the high pressure compressor 230 and the high pressure turbine 232. The high pressure compressor 230 includes an inlet 236 that fluidly communicates with the outlet 222 of the low pressure compressor 214 and a compressor bypass conduit 238. The high pressure compressor 230 also includes an outlet 240 that fluidly communicates with the compressor bypass conduit 238. It should be noted that a compressor bypass valve 241 is located on the compressor bypass conduit 238 separating the ends connecting to the inlet 236 and the outlet 240 of the high pressure compressor 230. The compressor bypass valve 241 is preferably a butterfly valve as discussed below. The high pressure turbine 232 includes an outlet 242 that fluidly communicates with the inlet 226 of the low pressure turbine 216 and a turbine bypass conduit 244. The high pressure turbine 232 also includes an inlet 246 that fluidly communicates with the turbine bypass conduit 244. It should be noted that a turbine bypass valve 245 is located on the turbine bypass conduit 244 separating the ends connecting to the inlet 246 and the outlet 242 of the high pressure turbine 232. The turbine bypass valve 245 is also preferably a butterfly valve as discussed below.

The outlet 240 of the high pressure compressor 230 and the compressor bypass conduit 238 fluidly communicate with an inlet 250 of a charge air cooler 248. An outlet 252 of the charge air cooler 248 fluidly communicates with an intake manifold 256 of an engine block 254. The engine block 254 includes a plurality of combustion cylinders 258. Four combustion cylinders 258 are included in this system. However, those skilled in the art will recognize appropriate changes to apply the present invention to an engine with any number or configuration of combustion cylinders. The engine block 254 also includes an exhaust manifold 260 that fluidly communicates with the inlet 246 of the high pressure turbine 232 and the turbine bypass conduit 244. The intake manifold 256 and the outlet 224 of the low pressure turbine 216 fluidly communicate through an EGR conduit 262. The EGR conduit 262 fluidly communicates with an inlet 264 of a cooler 266 through an EGR valve 270, thereby providing a hot-side EGR valve. Alternatively, an outlet 268 of the cooler 266 may fluidly communicate with the intake manifold 256 through the EGR valve 270, thereby providing a cold-side EGR valve. The EGR valve 270 is preferably a butterfly valve as discussed below.

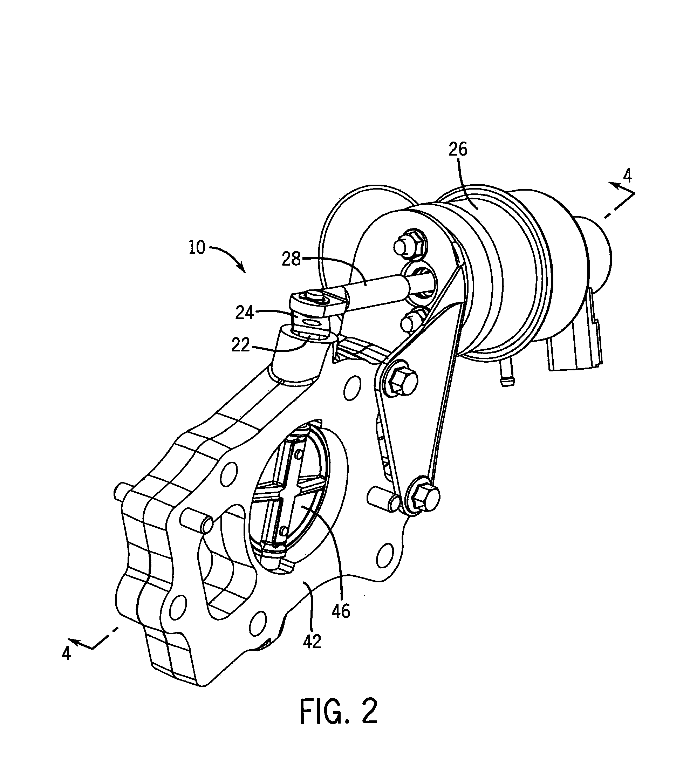

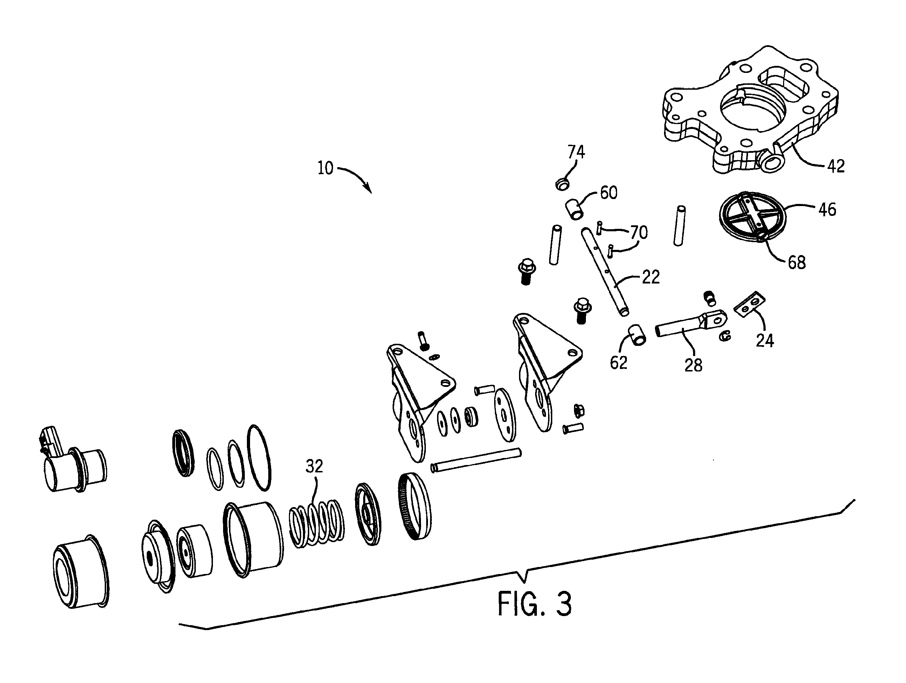

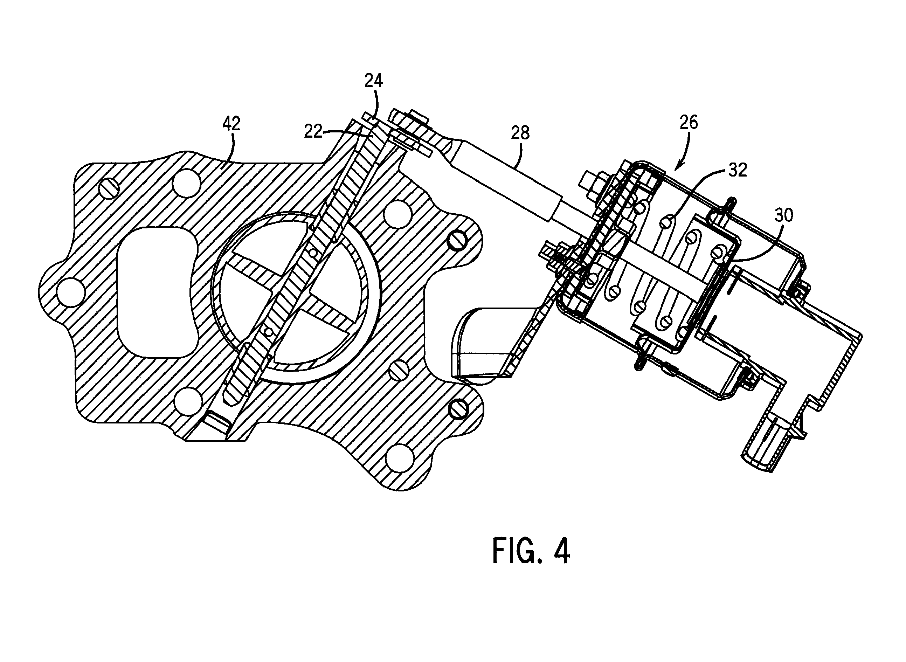

Referring to Fig. 2, a butterfly valve 10 incorporates a butterfly valve element 46 located within a housing 42. The physical design of the housing 42 may be modified depending on the shapes of the EGR conduits and the inlet of the coolers. The butterfly valve element 46 has a shaft 22 extending from the side thereof to which an arm 24 is affixed that acts as a lever arm for rotating the shaft 22, and the shaft 22 is affixed to the butterfly valve element 46 inside the butterfly valve 10 as described below. An actuator 26 is pressure operated to move rod 28 generally linearly along its axis so as to adjust the position of the butterfly valve element 46 according to the pressure exerted on the actuator 26. The actuator 26 is preferably a vacuum actuator including a diaphragm 30 and a biasing spring 32, as shown in Figs. 3 and 4. Such actuators are well known in the art. Alternatively, a solenoid driven actuator or other type of actuator may be used instead of a pressure operated actuator.

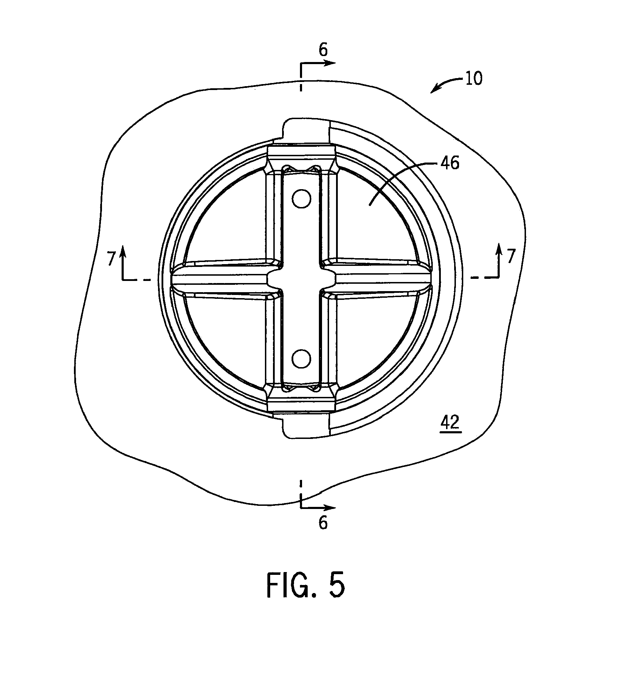

Referring to Figs. 5-7, the butterfly valve 10 includes a housing 42 through which a valve passageway 44 extends from one end to the other. The butterfly valve element 46 that is positioned in the passageway 44 is generally circular and can be rotated about the axis 58 of shaft 22 so that it is either blocking the passageway 44, or allowing passage of gas through the passageway 44 in varying amounts. When it is fully open, the butterfly valve element is oriented in a plane that is substantially perpendicular to the plane in which it lies in Figs. 5-7, which is the closed position, so that when open substantially only its thickness dimension is presented to the flow of gas in the passageway 44. As such, the flow of gas can pass the butterfly valve element 46 on both sides of it and since the shaft is in the middle of the valve, the valve is generally balanced by the stream of gas. When the butterfly valve element is closed (Figs. 5-7), it seats against lap seating surfaces 48 and 50 that are formed in the passageway 44 on the housing on opposite sides of the passageway 44 and facing opposite ends of the valve. The axis 58 about which the butterfly valve element 46 is turned is between the two lap seating surfaces 48 and 50, and is the axis of shaft 22.

Shaft 22 extends into bores 54 and 56 on opposite sides of the passageway 44, which are also aligned along the shaft axis 58. Bushings 60 and 62 are pressed into the respective bores 54 and 56 such that they do not turn relative to the housing 42 and are fixed along the axis 58 relative thereto. The bushings 60 and 62 journal the shaft 22 and also extend into butterfly counter bores 66 and 68 that are formed in opposite ends of the bore through the butterfly valve element 46 through which the shaft 22 extends. Pins 70 keep the butterfly valve element 46 from turning too much relative to the shaft 22, as they are pressed into holes in the shaft 22. The holes in the butterfly valve element 46 through which the pins 70 extend may be slightly larger than the pins 70 so they do not form a fixed connection with the butterfly element 46, so as to permit some freedom of relative movement. Thus, the butterfly valve element 46 can, to a limited extent, turn slightly relative to the shaft 22, and move along the axis 58 relative to the shaft 22, limited by the pins 70 and the other fits described herein.

A cap 74 is preferably pressed into the bore 56, to close off that end of the assembly. The shaft 22 extends from the opposite end, out of bore 54, so that it can be coupled to an actuator, for example like the actuator 26. A seal pack (not shown) can be provided between the shaft 22 and the bore 54 to inhibit leakage into or out of the valve, and a backer ring (not shown) may be pressed into the bore 54 to hold in the seal pack. The lap seating surfaces 48 and 50 are actually spaced by approximately the thickness of the butterfly valve element and seal against the butterfly valve element on their respective sides of the axis 58. In order to form these seals, the butterfly valve element 46 must be free to lay flat against the lap seating surfaces in the closed position of the valve. That is nearly impossible to do unless there is sufficient clearance built into the rotary joints that mount the butterfly valve element. The problem is that too much tolerance results in a leaky valve.

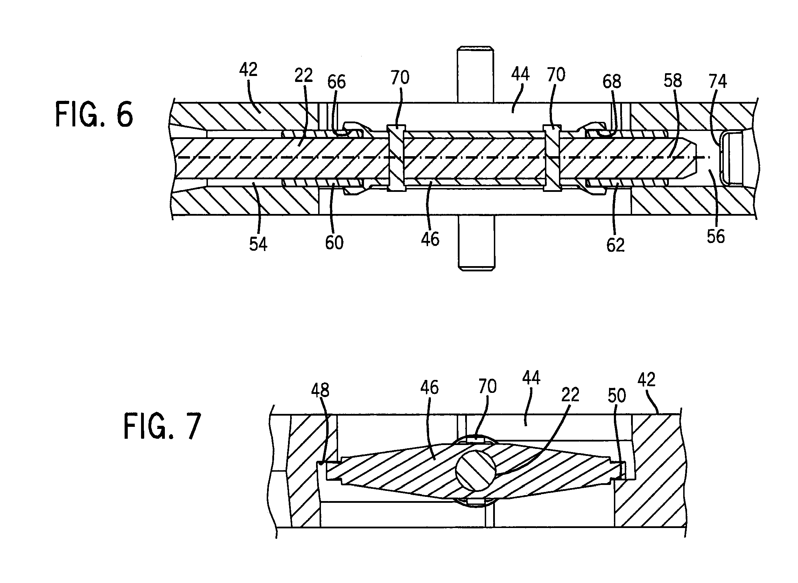

There is one slip fit between the bushings 60, 62 and their respective counter bores 68, 66, and there is another slip fit between the shaft 22 and the bushings 60, 62. It has been found that the leakage through the valve passageway 44 can be best controlled by making one of these fits a close running fit, and the other of these fits a medium or loose running fit. It is somewhat preferable to make the bushing-to-counter bore fit a close fit and the shaft-to-bushing fit the looser fit because providing the looser fit at the smaller diameter results in less overall leakage. However, either possibility has been found acceptable. In addition, as shown in Fig. 6, the bushing-to-counter bore interface is preferably shorter than the shaft-to-bushing interface. Providing the bushing-to-counter bore interface as a close fit and a short interface reduces leakage and permits the butterfly valve element 46 to move to a limited extent relative to the bushings 60 and 62 and the shaft 22 so that the butterfly valve element 46 seats flatly against the housing 42.

Choice of materials has also been found important to reduce the hysteresis of the valve. In addition, sets of materials can be selected based on the temperature range of the application. For example, an operating temperature above 850°C may correspond to one set of materials and an operating range between 850°C-750°C may correspond to another set of materials. It should also be recognized that similar materials may gall under high temperature and pressure. As such, the materials for the components of the butterfly valve 10 are preferably as follows: the housing 42 is cast steel or an HK30 austenitic stainless steel alloy, the butterfly valve element 46 is cast steel, the shaft 22 is stainless steel and the bushings 60 and 62 are a steel that is compatible with the operating temperature and coefficient of thermal expansion of the other materials. For higher operating temperatures, the shaft 22 and the butterfly valve element 46 may be stainless steel, the bushings 60 and 62 may be a cobalt/steel alloy, such as Tribaloy. Some applications may not require these materials or different combinations of these materials. For example, if the butterfly valve 10 is to be used in a low temperature application, the housing 42 may be high silicon molybdenum steel.

In an actual example, the fit of the bushings 60 and 62 to the counter bores 68 and 66 is that the OD of the bushings 60 and 62 is preferably 12.500mm +.000 -.011mm and the ID of the counter bores 68 and 66 is preferably 12.507mm +.000 -.005mm. These dimensions provide a maximum material condition of .002mm. In the same application, the OD of the shaft is preferably in the range of 8.985mm +.000 -.015mm and the ID of the bushings 60 and 62 is preferably in the range of 9.120mm ±.015mm. These dimensions provide a maximum material condition of .020mm.

Use of the EGR system according to the present invention provides several advantages. For example, the butterfly valve design permits even force application at opening and closing of the valve over a broad range of temperatures in which it must function. This provides an EGR system with a high level of control and modulation of recirculated gases to help satisfy emissions, power, and fuel mileage requirements. Leakage of recirculated gases into the engine compartment is also reduced.

A preferred embodiment of the invention has been described in considerable detail. Many modifications and variations to the embodiment described will be apparent to those skilled in the art. Therefore, the invention should not be limited to the embodiment described, but should be defined by the claims which follow.

## Claims

1. An exhaust gas recirculation system (110) for an engine (134), comprising:
an intake port (112) in fluid communication with an intake manifold (136) of the engine (134);
an exhaust line (150) in fluid communication with at least one exhaust manifold (140) of the engine (134);
an exhaust gas recirculation conduit (152) in fluid communication with the exhaust line (150) and the intake port (112); and
a butterfly valve (154, 270) fluidly positioned along the exhaust gas recirculation conduit (152) and in fluid communication with the exhaust line (150) and the intake port (112) and including:
a housing (42) having a valve passageway (44) through which exhaust gases pass from a first end to a second end of the valve (154, 270), the valve passageway (44) including:
a shaft axis (58);
bores (54, 56) on opposite sides of the passageway (44) that are aligned along the shaft axis (58) with one another;
lap seating surfaces (48, 50) on opposite sides of the passageway (44) facing opposite ends of the valve (154, 270), the shaft axis (58) being between the lap seating surfaces (48, 50);
a butterfly valve element (46) in the valve passageway (44) between the bores (54, 56), the butterfly valve element (46) having counter bores (66, 68);
two bushings (60, 62), each bushing (60, 62) being received in a different one of the bores (54, 56) and extending from the bore (54, 56) inwardly into a different one of the counter bores (66, 68) of the butterfly valve element (46); and
a shaft (22) extending between the bores (54, 56) and laterally through the butterfly valve element (46), the shaft (22) also extending in each of the bushings (60, 62) so as to journal the shaft (22) relative to the housing (42);
**characterized by** a cooler (115) fluidly positioned along the exhaust gas recirculation conduit (152) and in fluid communication with the exhaust line (150) and the intake port (112);
in that the shaft (22) extends between the bores (54, 56) and laterally through the butterfly valve element (46) so as to permit some freedom of relative movement;
and in that there is a first slip fit creating a first rotary joint between the bushings (60, 62) and the counter bores (66,68) and a second slip fit creating a second rotary joint between the shaft (22) and the bushings (60, 62), and one of the slip fits is closer than the other.

2. The exhaust gas recirculation system (110) of claim 1, wherein the first slip fit is a close running fit and the second slip fit is a looser fit than the first slip fit.

3. The exhaust gas recirculation system (110) of claim 2, wherein the first slip fit has a first interface length and the second slip fit has a second interface length, and wherein the first interface length is less than the second interface length.

4. The exhaust gas recirculation system (110) of claim 1, wherein the second slip fit is a close running fit and the first slip fit is a looser fit than the second slip fit.

5. The exhaust gas recirculation system (110) of claim 1, wherein a majority of the clearance provided by the slip fits is between the shaft (22) and the bushings (60, 62).

6. The exhaust gas recirculation system (110) of claim 1, wherein a majority of the clearance provided by the slip fits is between the bushings (60, 62) and the counter bores (66, 68).

7. The exhaust gas recirculation system (110) of claim 1, wherein the housing (42) and the butterfly valve element (46) are cast steel, the shaft (22) is stainless steel, and the bushings (60, 62) are steel.

8. The exhaust gas recirculation system (110) of claim 1, wherein the first slip fit has a first interface length and the second slip fit has a second interface length, and wherein the first interface length is less than the second interface length.

## Patentansprüche

1. Abgasrückführungssystem (110) für eine Maschine (134), umfassend:
einen Ansaugtrakt (112), der mit einem Ansaugkrümmer (136) der Maschine (134) in Strömungsverbindung steht,
eine Abgasleitung (150), die mit wenigstens einem Abgaskrümmer (140) der Maschine (134) in Strömungsverbindung steht,
eine Abgasrückführungsleitung (152), die mit der Abgasleitung (150) und dem Ansaugtrakt (112) in Strömungsverbindung steht,
eine Drosselklappe (154, 270), die an der Abgasrückführungsleitung (152) entlang strömungsmäßig positioniert und mit der Abgasleitung (150) und dem Ansaugtrakt (112) in Strömungsverbindung ist und Folgendes beinhaltet:
ein Gehäuse (42) mit einem Ventildurchgang (44), durch welchen Abgase von einem ersten Ende zu einem zweiten Ende des Ventils (154, 270) strömen, wobei der Ventildurchgang (44) Folgendes beinhaltet:
eine Wellenachse (58),
Bohrungen (54, 56) auf einander entgegengesetzten Seiten des Durchgangs (44), die an der Wellenachse (58) entlang miteinander fluchten,
Läpp-Sitzflächen (48, 50) auf einander entgegengesetzten Seiten des Durchgangs (44), die entgegengesetzten Enden des Ventils (154, 270) zugekehrt sind, wobei die Wellenachse (58) zwischen den Läpp-Sitzflächen (48, 50) ist,
ein Drosselklappenelement (46) im Ventildurchgang (44) zwischen den Bohrungen (54, 56), wobei das Drosselklappenelement (46) Senkungen (66, 68) hat,
zwei Buchsen (60, 62), wobei die Buchsen (60, 62) jeweils in einer anderen der Bohrungen (54, 56) aufgenommen sind und sich von der Bohrung (54, 56) einwärts in eine andere der Senkungen (66, 68) des Drosselklappenelements (46) erstrecken, und
eine Welle (22), die sich zwischen den Bohrungen (54, 56) und seitlich durch das Drosselklappenelement (46) erstreckt, wobei die Welle (22) sich auch in jeder der Buchsen (60, 62) erstreckt, um die Welle (22) relativ zum Gehäuse (42) zu lagern,
**gekennzeichnet durch** einen Kühler (115), der strömungsmäßig an der Abgasrückführungsleitung (152) entlang positioniert ist und mit der Abgasleitung (150) und dem Ansaugtrakt (112) in Strömungsverbindung steht,
**dadurch**, dass die Welle (22) sich zwischen den Bohrungen (54, 56) und seitlich **durch** das Drosselklappenelement (46) erstreckt, um etwas relative Bewegungsfreiheit zuzulassen,
und **dadurch**, dass es einen ersten Gleitsitz gibt, der ein erstes Drehgelenk zwischen den Buchsen (60, 62) und den Senkungen (66, 68) herstellt, und einen zweiten Gleitsitz, der ein zweites Drehgelenk zwischen der Welle (22) und den Buchsen (60, 62) herstellt, und einer der Gleitsitze enger als der andere ist.

2. Abgasrückführungssystem (110) nach Anspruch 1, wobei der erste Gleitsitz ein enger Laufsitz ist und der zweite Gleitsitz ein loserer Sitz als der erste Gleitsitz ist.

3. Abgasrückführungssystem (110) nach Anspruch 2, wobei der erste Gleitsitz eine erste Grenzflächenlänge hat und der zweite Gleitsitz eine zweite Grenzflächenlänge hat und wobei die erste Grenzflächenlänge kleiner als die zweite Grenzflächenlänge ist.

4. Abgasrückführungssystem (110) nach Anspruch 1, wobei der zweite Gleitsitz ein enger Laufsitz ist und der erste Gleitsitz ein loserer Sitz als der zweite Gleitsitz ist.

5. Abgasrückführungssystem (110) nach Anspruch 1, wobei ein Großteil des von den Gleitsitzen bereitgestellten Spiels zwischen der Welle (22) und den Buchsen (60, 62) ist.

6. Abgasrückführungssystem (110) nach Anspruch 1, wobei ein Großteil des von den Gleitsitzen bereitgestellten Spiels zwischen den Buchsen (60, 62) und den Senkungen (66, 68) ist.

7. Abgasrückführungssystem (110) nach Anspruch 1, wobei das Gehäuse (42) und das Drosselklappenelement (46) aus Stahlguss sind, die Welle (22) aus nichtrostendem Stahl ist und die Buchsen (60, 62) aus Stahl sind.

8. Abgasrückführungssystem (110) nach Anspruch 1, wobei der erste Gleitsitz eine erste Grenzflächenlänge hat und der zweite Gleitsitz eine zweite Grenzflächenlänge hat und wobei die erste Grenzflächenlänge kleiner als die zweite Grenzflächenlänge ist.

## Revendications

1. Un système de recirculation des gaz d'échappement (110) pour un moteur (134), comprenant :
un orifice d'admission (112) en communication fluide avec un collecteur d'admission (136) du moteur (134) ;
une conduite d'échappement (150) en communication fluide avec au moins un collecteur d'échappement (140) du moteur (134) ;
un conduit de recirculation des gaz d'échappement (152) en communication fluide avec la conduite d'échappement (150) et l'orifice d'admission (112) ; et
une vanne papillon (154, 270) positionnée de manière fluide le long du conduit de recirculation des gaz d'échappement (152) et en communication fluide avec la conduite d'échappement (150) et l'orifice d'admission (112) et incluant:
un boîtier (42) ayant un passage de vanne (44) à travers lequel les gaz d'échappement passent d'une première extrémité à une seconde extrémité de la vanne (154, 270), le passage de vanne (44) incluant :
un axe d'arbre (58) ;
des alésages (54, 56) sur des côtés opposés du passage (44) qui sont alignés le long de l'axe d'arbre (58) entre eux ;
des surfaces de siège de recouvrement (48, 50) sur des côtés opposés du passage (44) faisant face à des extrémités opposées de la vanne (154, 270), l'axe d'arbre (58) se trouvant entre les surfaces de siège de recouvrement (48, 50) ;
un élément de vanne papillon (46) dans le passage de vanne (44) entre les alésages (54, 56), l'élément de vanne papillon (46) ayant des contre-alésages (66, 68) ;
deux douilles (60, 62), chaque douille (60,62) étant reçue dans l'un différent des alésages (54, 56) et s'étendant à partir de l'alésage (54, 56) vers l'intérieur dans l'un différent des contre-alésages (66, 68) de l'élément de vanne papillon (46) ; et
un arbre (22) s'étendant entre les alésages (54, 56) et latéralement à travers l'élément de vanne papillon (46), l'arbre (22) s'étendant également dans chacune des douilles (60, 62) de manière à journaliser l'arbre (22) par rapport au boîtier (42) ;
**caractérisé par** un refroidisseur (115) positionné de manière fluide le long du conduit de recirculation des gaz d'échappement (152) et en communication fluide avec la conduite d'échappement (150) et l'orifice d'admission (112) ;
en ce que l'arbre (22) s'étend entre les alésages (54, 56) et latéralement à travers l'élément de vanne papillon (46) de manière à permettre une certaine liberté de mouvement relatif ;
et en ce qu'il y a un premier ajustage coulissant créant un premier joint rotatif entre les douilles (60, 62) et les contre-alésages (66, 68) et un second ajustage coulissant créant un second joint rotatif entre l'arbre (22) et les douilles (60, 62), et l'un des ajustages coulissants est plus proche que l'autre.

2. Système de recirculation des gaz d'échappement (110) de la revendication 1, où le premier ajustage coulissant est un ajustage serré et le second ajustage coulissant est un ajustage plus lâche que le premier ajustage coulissant.

3. Système de recirculation des gaz d'échappement (110) de la revendication 2, où le premier ajustage coulissant a une première longueur d'interface et le second ajustage coulissant a une seconde longueur d'interface, et où la première longueur d'interface est inférieure à la seconde longueur d'interface.

4. Système de recirculation des gaz d'échappement (110) de la revendication 1, où le second ajustage coulissant est un ajustage serré et le premier ajustage coulissant est un ajustage plus lâche que le second ajustage coulissant.

5. Système de recirculation des gaz d'échappement (110) de la revendication 1, où une majorité du jeu fourni par les ajustages coulissants se trouve entre l'arbre (22) et les douilles (60, 62).

6. Système de recirculation des gaz d'échappement (110) de la revendication 1, où une majorité du jeu fourni par les ajustages coulissants se trouve entre les douilles (60, 62) et les contre-alésages (66, 68).

7. Système de recirculation des gaz d'échappement (110) de la revendication 1, où le boîtier (42) et l'élément de vanne papillon (46) sont de l'acier coulé, l'arbre (22) est de l'acier inoxydable, et les douilles (60, 62) sont de l'acier.

8. Système de recirculation des gaz d'échappement (110) de la revendication 1, où le premier ajustage coulissant a une première longueur d'interface et le second ajustage coulissant a une seconde longueur d'interface, et où la première longueur d'interface est inférieure à la seconde longueur d'interface.
